# EUROPÄISCHE PATENTSCHRIFT

(11) **EP 2 002 925 B1**
(45) Veröffentlichungstag und Bekanntmachung des Hinweises auf die Patenterteilung: **20.01.2010**
(21) Anmeldenummer: 08010887.1
(22) Anmeldetag: 16.06.2008
(51) Int. Cl.: B23Q 1/00

(54) **Tragkonstruktion für ein Bedienpult einer Werkzeugmaschine**
Support construction for a control panel of a machine tool
Structure portante pour un dispositif de contrôle d'une machine-outil

(30) Priorität: 14.06.2007 DE 202007008317 U
(43) Veröffentlichungstag der Anmeldung: 17.12.2008
(73) Patentinhaber: DECKEL MAHO Pfronten GmbH, 87459 Pfronten (DE)
(72) Erfinder: Seitz, Reinhold, 87659 Hopferau (DE); Lechleiter, Karl, 87466 Oy-Mittelberg (DE); Schindler, Dominic, 6923 Lauterach (AT)
(74) Vertreter: Beetz & Partner

(56) Entgegenhaltungen:
- DE-A1- 4 444 614
- DE-C1- 3 730 984

## Beschreibung

Die Erfindung betrifft eine Werkzeugmaschine mit einer Tragkonstruktion und einem Bedienpult der im Oberbegriff des Patentanspruchs 1 angegebenen Gattung.

Programmsteuerungen von modernen Werkzeugmaschinen und Bearbeitungszentren für die spanende Bearbeitung von Werkstücken enthalten regelmäßig eine Eingabestation in Form eines Bedienpults, das entweder an einem ortsfesten Bauteil der Maschine, beispielsweise an einer Seitenwand der Schutzkabine, befestigt oder am freien Ende eines relativ langen Tragholms montiert ist. Wesentlicher Bestandteil des Bedienpults ist regelmäßig eine Tastatur und eine Anzeigeeinheit, in der Regel ein Bildschirm, die am hinteren Ende der Tastatur in einer vorgegebenen festen Schräglage angeordnet und mit dem Gehäuse der Tastatur fest verbunden ist. Die Anordnung des Bedienpults am freien Ende des in der Horizontalen verschwenkbaren Tragholms hat den Vorzug, dass der Bediener das Bedienpult entsprechend der von ihm auszuführenden Arbeit in die jeweils geeignete Lage bewegen kann.

Aus der DE 37 30 984 C1 ist eine Werkzeugmaschine mit einem Bedienpult bekannt, das mittels einer Tragkonstruktion an einer Seite einer Werkzeugmaschine befestigt ist. Die Tragkonstruktion weist einen mehrfach abgewinkelten biegesteifen Tragholm auf, der mit einem kurzen horizontalen Abschnitt drehfest an der Seitenwand der Werkzeugmaschine befestigt ist und einen mittleren schrägen Abschnitt sowie einen vertikalen Endabschnitt enthält. Auf dem vertikalen Endabschnitt ist das Bedienpult verdrehbar angeordnet, das eine Tastatur und eine Anzeigeeinheit aufweist.

Die von programmgesteuerten Werkzeugmaschinen auszuführenden Arbeiten und Bearbeitungsvorgänge sind häufig hoch komplex und erfordern mitunter mehrstündige Programmierarbeiten vom Bediener. Es hat sich gezeigt, dass die Konzentrationsfähigkeit der Programmierer im Verlauf von längeren Programmierarbeiten nachlässt, wenn diese langwierigen Arbeiten im Stehen ausgeführt werden. Wenn sich der Programmierer wegen gewisser Ermüdungserscheinungen auf das Bedienpult bzw. dessen Tastenfeld oder Tastatur auflehnt, werden die dann von ihm ausgeübten Gewichtskräfte über den relativ langen Tragholm verstärkt als Momente auf den Maschinenunterbau übertragen. Diese Belastungen des Maschinenunterbaus bzw. des Maschinengestells können zu Bearbeitungsungenauigkeiten und bei hohen Präzisionsarbeiten zu unzulässig großen Toleranzen führen.

Aufgabe der Erfindung ist es, eine Tragkonstruktion für ein Bedienpult einer Werkzeugmaschine zu schaffen, die eine bequemere Position des Programmierers bei gleichbleibend guter Zugänglichkeit des Bedienpults ermöglicht und die nachhaltige Auswirkungen auf das Betriebsverhalten der Werkzeugmaschine, insbesondere auf deren Bearbeitungsgenauigkeit, verhindert.

Diese Aufgabe wird erfindungsgemäß durch die Merkmale des Patentanspruchs 1 gelöst. Am Tragholm oder am Bedienpult ist ein Sitzelement für den Programmierer über eine Halterung vorgesehen und an dem etwa horizontalen maschinenseitigen Abschnitt des Tragholms ist mindestens ein Stützfuß angeordnet, der vertikale Belastungen des Tragholms auf den Fußboden überträgt.

Durch das erfindungsgemäße Vorsehen eines Sitzelements erhält der Programmierer die Möglichkeit, bei längeren Programmierarbeiten eine wählbare bequemere Sitzposition einzunehmen. Durch die Anordnung des Sitzelements mit seiner Halterung am oberen Abschnitt des Tragholms bzw. am Bedienpult erhält der Programmierer einen ermüdungsarmen Zugriff auf die dann in einer ergometrischen Position befindliche Tastatur und kann die entsprechenden Vorgänge problemlos auf dem Bildschirm verfolgen. Damit die Gewichtskräfte des sitzenden Programmierers nicht in voller Stärke über die Halterung des Sitzelements und über den relativ weit auskragenden langgestreckten Tragholm auf das Maschinengestell bzw. auf den Maschinenunterbau übertragen werden, ist der Stützfuß an der Unterseite des Tragholms vorzugsweise am Ende seines horizontalen maschinenseitigen Abschnitts angeordnet.

Zum Ausführen von horizontalen seitlichen Schwenkbewegungen des Tragholms wird ein vorgegebener Abstand zwischen dem Boden und dem Stützfuß eingehalten, damit beim Verschwenken ein Schleifen des Stützfußes auf dem Boden oder andersartige Kollisionen vermieden werden. Zweckmäßig kann der Stützfuß in seiner vorstehenden Länge z.B. über ein Schraubgewinde einstellbar an dem stabilen Tragholm befestigt sein. Es ist auch möglich, den Stützfuß beweglich mit dem Tragholm zu verbinden, sodass er vom Bediener aus einer Stand-by-Stellung in eine aktive Stützstellung gebracht werden kann, wenn der Tragholm in seine gewünschte Position geschwenkt worden ist.

Gemäß einer zweckmäßigen Ausgestaltung der Erfindung ist zwischen einem bodennahen Teil des Unterbaus der Maschine und dem maschinenseitigen Ende de Tragholms eine Lageranordnung vorgesehen, über die der Tragholm in mehreren Achsen bewegbar mit dem Maschinenunterbau verbunden ist. Diese mit Federelementen versehene Lageranordnung ermöglicht Schwenkbewegungen des Tragholms in der Horizontalen um eine Hochachse eines Drehlagers sowie auch begrenzte Vertikalbewegungen des Tragholms bis zur Auflage des Stützfußes auf dem Boden. Die Lageranordnung kann in unterschiedlichen Varianten ausgeführt sein und ermöglicht Bewegungen des Tragholms in bzw. um mindestens zwei Achsen, nämlich seine horizontalen Schwenkbewegungen um die vertikale Hochachse eines ersten Lagers und daneben auch begrenzte Vertikalbewegungen.

Bei einer Ausführung weist die Lageranordnung ein als Drehlager wirkendes erstes Lager für horizontale Schwenkbewegungen des Tragholms um eine Hochachse sowie ein mit diesem ersten Lager mechanisch gekoppeltes zweites Lager für geringfügige und begrenzte vertikale Schwenkbewegungen um eine horizontale Drehachse auf.

Eine andere Ausführung der Lageranordnung enthält ein als Drehlager wirkendes erstes Lager für die horizontalen Schwenkbewegungen des Tragholms um eine Hochachse sowie ein Linear- bzw. Schiebelager, das vertikale Relativbewegungen zwischen dem maschinenseitigen Endstück des Tragholms und dem Unterbau der Werkzeugmaschine zulässt. Diese Lageranordnung ergibt eine hohe Biege- und Verwindungssteifigkeit der gesamten Tragkonstruktion und vermeidet unerwünschte Verwindungen des Tragholms, die zu Schrägstellungen des daran endseitig montierten Bedienpults führen könnten. Zweckmäßig kann diese Ausführung der Lageranordnung relativ steife Federelemente und kipp- und klemmfreie Profilschienen-Führungen enthalten, die kurze Bewegungen des Tragholms in vertikaler Richtung zulassen, Verdrehungen in der Längsachse und Verwindungen aber verhindern.

Bei den gemäß der Erfindung ausgebildeten Lageranordnungen überbrücken die Vertikalbewegungen des Tragholms lediglich den nur wenige Zentimeter betragenden freien Abstand zwischen dem Stützfuß und dem Boden, wenn der Bediener auf dem Sitzelement Platz genommen hat. Der Stützfuß befindet sich dabei in seiner voreingestellten Stützposition und kontaktiert den Boden in der Endphase der vertikalen Schwenkbewegung des Tragholms. Die vom sitzenden Programmierer auf den Tragholm ausgeübten Gewichtskräfte werden auf diese Weise bevorzugt vom Stützfuß in den Fußboden eingeleitet. Dabei ist die Position des Stützfußes vorzugsweise am Ende des horizontalen Tragholmabschnitts so gewählt, dass die aus den Gewichtskräften resultierenden Momente von der jeweiligen Lageranordnung des Tragholms am Maschinenunterbau aufgenommen werden können.

Das bei der erfindungsgemäßen Tragkonstruktion verwendete Sitzelement sollte eine ergonometrisch günstige Form haben und aus elastisch verformbaren Materialien, beispielsweise Kunststoffpolstern, bestehen, um Ermüdungen des sitzenden Bedieners entgegenzuwirken. Zweckmäßig ist das Sitzelement ein am Bedienpult verschwenkbar angelenkter Sitzbügel, dessen Tragstange am oberen Abschnitt des Tragholms oder an der Halterung des Bedienpults angelenkt ist und dessen abgewinkelter Endabschnitt ein zylindrisches Polsterelement trägt. Die mit ihrem oberen Ende an einem dem Bedienpult zugeordneten Lager gehaltene Tragstange ist in eine bequeme Schräglage vom Bediener einstellbar und kann in der gewünschten Position durch Betätigen eines Feststellmechanismus arretiert werden.

Gemäß einer weiteren zweckmäßigen Ausgestaltung der Erfindung ist das Sitzelement kinematisch über z.B. elektrische oder fluidische Leitungen und Schaltorgane mit einer in der jeweiligen Lageranordnung vorgesehenen Arretiereinrichtung verbunden, die bei Belastung des Sitzelements durch den Bediener gelöst wird.

Gemäß einer weiteren zweckmäßigen Ausgestaltung der Erfindung ist der Tragholm zum Erhalt einer hohen Biegesteifigkeit bei geringem Gewicht als Hohlprofil ausgebildet, das längs durchgehende Kanäle zur Aufnahme der Steuerkabel aufweist. Zweckmäßig finden Alu-Strangpressprofile Anwendung, die eine teileliptische Außenkontur und mehrere radiale längs durchgehende Versteifungsrippen aufweisen können. Ein nach radial außen offener Kabelkanal kann durch ein dünnwandiges Abdeckelement überdeckt werden, das über Rasten mit dem Hohlprofil beidseitig verbunden wird.

Weitere Vorzüge und Besonderheiten der erfindungsgemäßen Tragkonstruktion lassen sich der folgenden Beschreibung eines in der Zeichnung dargestellten Ausführungsbeispiels entnehmen. Es zeigen
- Fig. 1: schematisch eine Tragkonstruktion mit an einem Bedienpult sitzendem Programmierer an der Schutzkabine einer Werkzeugmaschine in perspektivischer Darstellung;
- Fig. 2: ein Bedienpult mit einem Sitzelement in schematischer perspektivischer Darstellung;

- Fig. 3: einen Querschnitt des Tragholms;
- Fig. 4: ein Ausführungsbeispiel einer Lageranordnung in schematischer perspektivischer Darstellung.

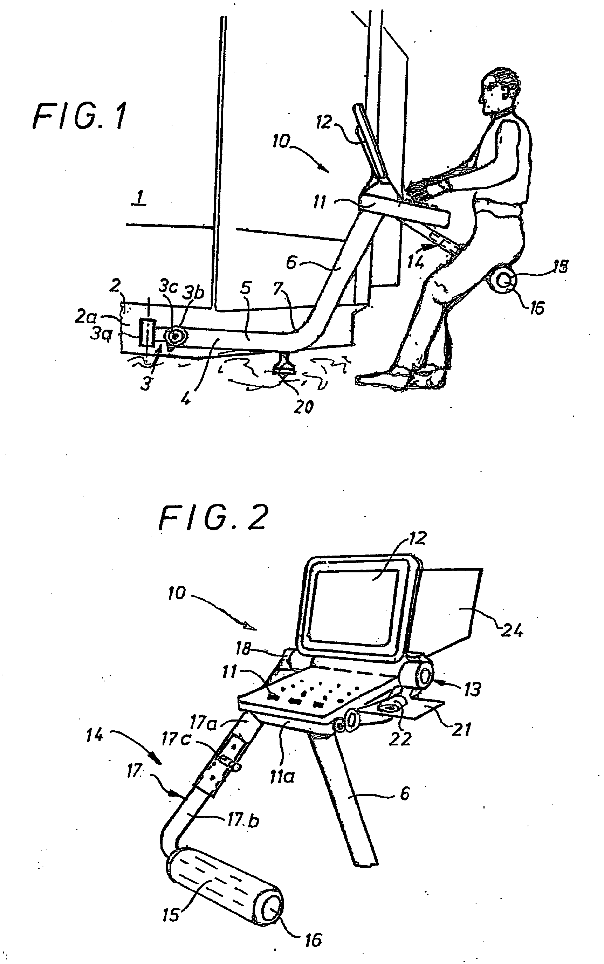

In Fig. 1 ist in schematischer Seitenansicht ein Teil einer Schutzkabine 1 und eines auf dem Boden über nicht dargestellte Füße aufstehenden Unterbaus 2 einer Werkzeugmaschine gezeigt. Die erfindungsgemäße und im Folgenden eingehend beschriebene Tragkonstruktion kann an unterschiedlichen Werkzeugmaschinentypen, z.B. an Drehmaschinen, Fräs- und Bohrmaschinen, Schleifmaschinen od. dgl. sowie auch an entsprechenden Bearbeitungszentren eingesetzt werden. Die Tragkonstruktion ist zur Halterung eines Bedienpults konzipiert, welches in unterschiedlichen Varianten ausgebildet sein kann. Das in der Zeichnung dargestellte und im Folgenden beschriebene Bedienpult stellt eine gegenüber bekannten Bedienpulten neue und besonders vorteilhafte Ausführung dar.

An einer Seitenfläche des von der Schutzkabine 1 überragten Unterbaus 2 der dargestellten Fräs- und Bohrmaschine ist eine Lageranordnung 3 vorgesehen, die einen Teil der erfindungsgemäßen Tragkonstruktion bildet und bei dem in Fig. 1 dargestellten Ausführungsbeispiel als doppelgelenkige Lageranordnung 3a, 3b ausgeführt ist. An der Seitenwand 2a des Unterbaus 2 ist ein erstes Lager 3a fest angebaut, das als Drehlager wirkt und Drehbewegungen des Tragholms um die strichpunktiert dargestellte vertikale Hochachse zulässt. Dieses erste Lager 3a ist über Doppelstege oder Bügel mit einem zweiten Lager 3b verbunden, das Drehbewegungen um seine horizontale Mittelachse zulässt. In diesem zweiten Lager 3b ist eine Feder 3c als Drehstab bzw. Torsionsfeder eingebaut. Ferner befindet sich in diesem zweiten Lager 3b ein formschlüssiger oder kraftschlüssiger Verriegelungsmechanismus, z.B. in Form von federbelasteten Zapfen, Keilen, od. dgl., der durch Betätigung von elektromechanischen oder fluidischen Schaltelementen aktiviert und gelöst werden kann. Durch Aktivieren dieses Verriegelungsmechanismus wird das zweite Lager 3b fixiert, sodass Bewegungen um die horizontale Mittelachse verhindert werden. Nach Lösen dieses Verriegelungsmechanismus durch Betätigen eines Schaltelements können Verdrehbewegungen ausgeführt werden, wobei dann die Drehfeder 3c in Funktion tritt und diese Bewegungen dämpft.

Bei der in Fig. 1 als ein erstes Ausführungsbeispiel dargestellten Lageranordnung ist an dem Drehglied des zweiten Lagers 3b ein formsteifer Tragholm 4 befestigt, der aus einem außenseitig runden oder elliptischen oder kantigen Hohlprofil besteht. Die bei diesem Ausführungsbeispiel doppelgelenkige Lageranordnung ermöglicht durch die Kombination des ersten und zweiten Lagers 3a, 3b eng begrenzte Vertikalbewegungen des Tragholms 4 um die horizontale Achse des zweiten Lagers 3b gegen die Dämpfungskraft der im zweiten Lager integrierten Drehfeder 3c. Durch die Funktion des ersten Lagers 3a werden größere horizontale Schwenkbewegungen des Tragholms 4 um die vertikale Achse des ersten Lagers 3a ermöglicht, um das am freien Ende des Tragholms montierte Bedienpult in die vom Bediener gewünschte Arbeitsstellung zu bringen.

Bei dem in Fig. 1 dargestellten Ausführungsbeispiel weist der Tragholm 4 einen geraden maschinenseitigen Abschnitt 5 auf, der endseitig an die Lageranordnung 3 anschließt und über einen Bogenabschnitt 7 in einen schräg nach oben ausgerichteten Holmabschnitt 6 übergeht. Am freien Ende des nach aufwärts gerichteten geradlinigen Holmabschnitts 6 ist ein Bedienpult 10 befestigt, das eine Tastatur 11 und eine Anzeigeeinheit 12 mit einem Flachbildschirm enthält. Der schräg nach aufwärts gerichtete Holmabschnitt 6 ist am rückwärtigen Teil eines flachen rechteckigen Gehäuses 11a der Tastatur 11 an dessen Unterseite so positioniert und befestigt, dass sich unter dem Tastaturgehäuse 11 a ein ausreichend großer Freiraum für die Beine eines Bedieners ergibt (vgl. Fig. 1).

Die Tastatur 11 bzw. ihr Gehäuse 11 a des Bedienpults 10 kann mit der Anzeigeeinheit 12, d.h. mit dem Flachbildschirm und seinem Gehäuse, als integrale Baueinheit ausgeführt sein. Bei dieser Ausführung lässt sich die Schräglage der Anzeigeeinheit 12, d.h. des Flachbildschirms, nicht verändern. Bei dem in Fig. 2 dargestellten Bedienpult 10 ist jedoch die Anzeigeeinheit 12 mit dem rückseitigen Rand der Tastatur 11 über ein durchgehendes Scharnier 13 verbunden, sodass die Anzeigeeinheit 12 mit dem Flachbildschirm vom Bediener in eine geeignete Schräglage im Raum und gegenüber der Tastatur 11 eingestellt werden kann. Um willkürliche und unerwünschte Verstellungen der Anzeigeeinheit 12, die durch Schwingungen und Vibrationen beim Betrieb der Werkzeugmaschine verursacht werden können, zu verhindern, ist in dem Scharnier 13 ein geeigneter Feststellmechanismus mit z.B. Indexierelementen, Klemmen od. dgl., vorgesehen, der vom Bediener nach Einstellen der optimalen Bildschirmposition betätigt wird.

Um die bei langwierigen Programmierarbeiten möglicherweise auftretenden Ermüdungserscheinungen des Bedieners in Grenzen zu halten, ist eine Sitzstütze 14 vorgesehen, auf welcher der Bediener eine sitzähnliche Position einnehmen kann, wie dies in Fig. 1 dargestellt ist. Diese Sitzstütze 14 enthält ein Sitzpolster 15, das bei dem dargestellten Ausführungsbeispiel als ummantelter Schaumstoffzylinder ausgeführt ist. Dieses Sitzpolster 15 ist drehfest auf dem abgewinkelten horizontalen Endstück 16 einer Tragstange 17 befestigt. Das abgewinkelte Endstück 16 und damit auch das Sitzpolster 15 befinden sich in Front vor und unterhalb der Tastatur 11, sodass der Bediener vor der Tastatur 11 und dem Bildschirm 12 sitzt.

Das horizontale Endstück 16 geht über einen Bogen in die geradlinige oder ggf. bogenförmige Tragstange 17 über. Um die Höhenlage des Sitzpolsters 15 entsprechend der Körpergröße des Bedieners einstellen zu können, ist die Länge der Tragstange 17 verstellbar. Bei dem dargestellten Ausführungsbeispiel ist die Tragstange 17 teleskopartig ausgebildet und besteht aus einem oberen Stangenteil 17a sowie einem darin längsverschiebbar geführten unteren Stangenteil 17b, der über den Bogen in das horizontale Endstück 16 übergeht. Die beiden Tragstangenteile 17a und 17b lassen sich in ausgewählten Relativstellungen mittels eines Indexierbolzens 17c od. dgl. miteinander verriegeln.

Wie aus Fig. 1 und 2 ersichtlich, kann die Tragstange 17 bzw. bei dem dargestellten Ausführungsbeispiel der obere Tragstangenteil 17a wahlweise an der linken und/oder an der rechten Seiten des Bedienpults 12 angeordnet werden. Bei der Ausführung nach Fig. 1 ist die Tragstange 17 - von vorn gesehen - an der rechten Seite des Bedienpults 10 verschwenkbar angeordnet. Bei der in Fig. 2 dargestellten Anordnung erstreckt sich die Tragstange 17 links vom Bedienpult 10, wobei sich in beiden Fällen das Sitzpolster 15 direkt vor dem Bedienpult 10 befindet. Diese frei wählbare seitliche Anordnung der Tragstange 17 und damit auch des Sitzpolsters 15 ermöglicht eine einfache Anpassung der Positionierung des Bedienpults an unterschiedliche Maschinentypen und Betriebsorte.

Am freien Ende des oberen Stangenteils 17a ist ein Lagerelement 18 angeordnet, das auf einem horizontalen Lagerbolzen um die Achse des Scharniers 13 verdrehbar gelagert ist. Über dieses Lagerelement 18 kann die Tragstange 17 und damit auch das Sitzpolster 15 aus einer dargestellten Betriebsstellung in eine zum Tragholmabschnitt 6 hin eingeschwenkte Stand-by-Position verschwenkt werden. Der aus Lagerelement 18 und Lagerbolzen od. dgl. gebildete Lageranordnung ist ein Feststellmechanismus zugeordnet, der formschlüssige Verriegelungselemente, wie federbelastete oder fluidisch bzw. elektromagnetisch betätigbare Indexierbolzen oder kraftschlüssige Klemmelemente enthalten kann. Zweckmäßig ist dieser Feststellmechanismus so ausgebildet, dass er bei Belastung des Sitzpolsters 15 durch den Bediener nach einer kleinen Schwenkbewegung automatisch aktiviert wird, um das Sitzpolster 15 in der eingestellten Position zu fixieren.

Wenn der Programmierer die in Fig. 1 gezeigte Sitzposition auf dem Sitzpolster 15 einnimmt, wird ein Teil seiner Gewichtskraft vom Sitzpolster 15 über die Tragstange 17 auf den Tragholm 4 übertragen. Damit die Auswirkungen dieser Gewichtskraft auf den Maschinenunterbau minimiert werden, ist bei dem Ausführungsbeispiel nach Fig. 1 am horizontalen Abschnitt des Tragholms 4 im Bereich des Bogens 7 unterseitig ein Stützfuß 20 vorgesehen. Dieser Stützfuß 20 ist bei dem dargestellten Ausführungsbeispiel z.B. durch Ein- oder Ausschrauben in seiner vorkragenden Länge einstellbar, wobei nach einer Voreinstellung der Stützfuß 20 nicht weiter verstellt wird. Allerdings kann bei anderen Ausführungen der Stützfuß auch beweglich an dem Tragholm 4 montiert sein, sodass er aus einer aktiven Betriebsstellung in eine Stand-by-Stellung gebracht werden kann.

Bei dem dargestellten Ausführungsbeispiel ist bei unbelastetem Sitzelement zwischen dem Boden und dem Stützfuß 20 ein vorgegebener Abstand von einigen 10 mm vorhanden, sodass der Tragholm 4 und damit auch das Bedienpult 10 bei der in Fig. 1 dargestellten Lageranordnung im ersten Lager 3a um dessen Hochachse in der horizontalen Ebene frei verschwenken kann, ohne dass der Stützfuß 20 auf dem Boden aufsitzt oder schleift. In diesem Zustand ist die Arretierung im zweiten Lager 3b aktiviert, sodass die horizontale Lage und Ausrichtung des Tragholms 4 bei einer Schwenkbewegung erhalten bleibt und der Stützfuß 20 den Boden nicht berührt. Der Bediener kann in stehender Position am Bedienpult 10 arbeiten.

Wenn der Bediener in der in Fig. 1 gezeigten Weise auf dem Sitzpolster 15 Platz nimmt, wird die Tragstange 17 durch sein Gewicht um einen kleinen Betrag von wenigen Grad verschwenkt. Diese Schwenkbewegung aktiviert einen Schalter, der z.B. im Tastaturgehäuse 11a oder am Scharnier 13 angeordnet sein kann. Dieser Schalter löst bei der in Fig. 1 dargestellten Lageranordnung die Arretierung im zweiten Lager 3b durch fluidische, elektromagnetische oder mechanische Mittel, sodass der Tragholm 4 so weit vertikal verschwenkt werden kann, bis der Stützfuß 20 auf dem Boden aufsteht. Damit diese geringe Schwenkbewegung nicht abrupt erfolgt, wird sie durch die Wirkung der in das zweite Lager 3b eingebauten Drehstab- bzw. Torsionsfeder 3c gedämpft. Dabei ist der Feststellmechanismus am Tastaturgehäuse 11 oder am Scharnier 13 aktiviert, sodass das Sitzpolster 15 in seiner vorgewählten Stellung fixiert wird.

Die erfindungsgemäße Tragkonstruktion mit dem Sitzpolster 15 und der Abstützung des Tragholms 4 ist für unterschiedliche Bedienpulte konzipiert. Ein universell einsetzbares neues Bedienpult ist in Fig. 2 dargestellt. Das auf dem oberen Ende des schräg nach aufwärts gerichteten Tragholmabschnitts 6 befestigte Tastaturgehäuse 11 a enthält an seinem rückwärtigen Rand die von dem Scharnier 13 gebildete Lageranordnung, an welcher die Anzeigeeinheit 12 winkelverstellbar angeordnet ist. Ein vom Bediener betätigbarer Fixiermechanismus am oder im Scharnier 13 ermöglicht die Feststellung der Anzeigeeinheit 12 in einer gewünschten Schräglage. An der von vorn gesehen rechten Seite der Tastatur ist am Scharnier 13 eine Auflageplatte 21 als Auflage für eine Computer-Maus 22 verschwenkbar angeordnet. Ferner ist an dieser Seite eine weitere Platte 24 verschwenkbar am Scharnier 13 gelagert, die als Schreibunterlage oder als Zettelhalter benutzt werden kann.

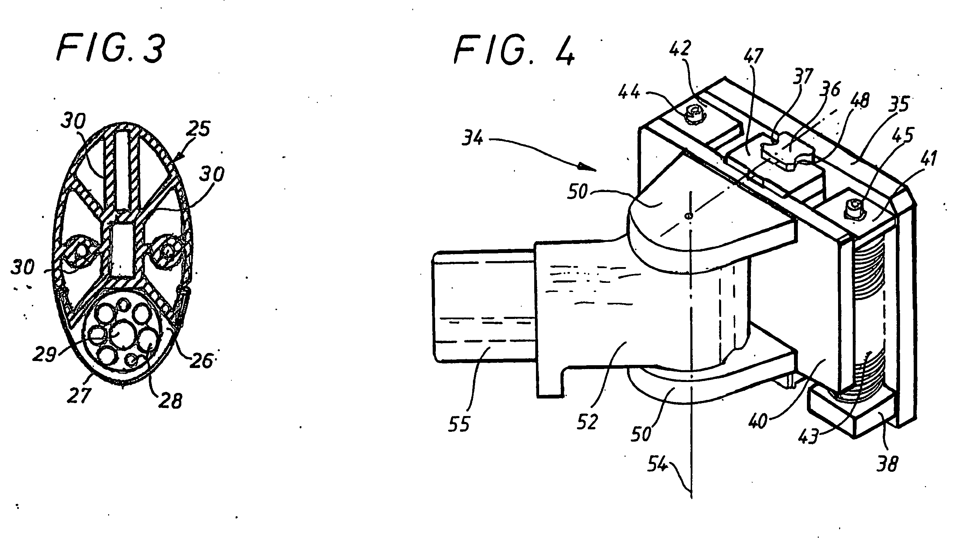

Zum Erhalt der notwendigen hohen Biegesteifigkeit bei geringem Gewicht ist der Tragholm 4 als Hohlprofil aus vorzugsweise Leichtmetall ausgebildet, das eine Verlegung der benötigten Steuerkabel ermöglicht. Eine besonders geeignete Ausführung dieses Hohlprofils für einen Tragholm 4 ist in Fig. 3 im Querschnitt dargestellt. Dieser Tragholm 4 besteht aus einem Alu-Strangpressprofil, das eine teilelliptische Außenkontur und in seinem in Fig. 3 unteren Teil einen Kabelkanal 16 enthält. Ein dünnwandiges im Querschnitt bogenförmiges Abdeckelement 27 wird durch eine einfache Rastverbindung befestigt und überdeckt den nach außen freiliegenden Kabelkanal 26. In diesem Kabelkanal sind verschiedenartige Kabel 28, 29 angeordnet. Zur Erzielung einer hohen Steifigkeit und damit eines entsprechend hohen Lastaufnahmevermögens sind innere Versteifungsstege 30 im Hohlprofil vorgesehen, die in unterschiedlichen radialen Richtungen verlaufen und damit eine hohe Biegefestigkeit gegenüber verschieden gerichteten Belastungen gewährleisten. Zwei der mittleren Stege 30 weisen je ein Auge mit einer zentralen Öffnung zur Aufnahme von - nicht dargestellten - Befestigungsschrauben auf.

In Fig. 4 ist ein weiteres Ausführungsbeispiel einer in der erfindungsgemäßen Tragkonstruktion integrierten Lageranordnung 34 dargestellt, die besonders vorteilhaft ist, wenn die Tragkonstruktion ohne Abstützung des Tragholms 4 auf dem Boden eingesetzt wird. Diese Lageranordnung 34 enthält eine relativ dickwandige, hier rechteckige, stabile Platte 35, die in einem bodennahen Bereich am Unterbau 2 der Maschine durch geeignete Befestigungselemente, wie z.B. Schrauben, Bolzen, od. dgl., befestigt wird. An der Vorderseite der Platte 35 sind im mittleren Bereich Führungselemente 36 in einer Vertikalnut 37 befestigt, die aus einer durchgehenden Führungsschiene oder auch aus mehreren übereinander in der Vertikalnut 37 eingefügten Führungsklötzen bestehen können. Ferner sind im unteren Bereich der Platte 35 zwei seitliche Stützplatten 38 frontseitig befestigt, von denen in Fig. 4 nur die rechte Stützplatte 38 ersichtlich ist.

Der rückwärtigen Platte 35 planparallel gegenüberliegend ist eine hochfeste Tragplatte 40 angeordnet, an deren oberen seitlichen Bereichen zwei rückseitige Stützplatten 41, 42 befestigt sind, die zu den unteren Stützplatten 38 in axialer Flucht ausgerichtet sind. Zwischen den beiden unteren Stützplatten 38 und den beiden oberen Stützplatten 41, 42 ist je ein relativ steifes Federelement 43 eingespannt, das bei dem in Fig. 4 dargestellten Ausführungsbeispiel jeweils eine Schraubenfeder ist. In Fig. 4 ist nur das rechte Federelemente erkennbar. Zur Fixierung und Einstellung der Vorspannkraft bzw. Federsteifigkeit der Schraubenfedern 43 dienen Schraubbolzen 44, 45. Zwischen den beiden Federelementen 43 ist an der Rückseite der Tragplatte 40 mindestens ein Führungsschuh 47 befestigt, der einen vertikalen Ausschnitt 48 aufweist, in dem das ortsfeste Führungselement 36 vertikal verschiebbar aufgenommen und geführt ist.

An der Vorderseite der Tragplatte 40 sind zwei horizontale Lagerplatten 50, 51 mit vertikalem Zwischenabstand befestigt. In dem Raum zwischen diesen Lagerplatten 50, 51 ist ein Endstück 52 um eine Achse 54 verschwenkbar gelagert, dessen Profilansatz 55 in das offene Ende des Tragholms 4 eingefügt wird.

Bei der vorstehend anhand der Fig. 4 beschriebenen Lageranordnung werden Verwindungen der Tragkonstruktionen um die Längserstreckung des Tragholms 4 und die daraus resultierenden Schräglagen des Bedienpults 10 sicher vermieden, und zwar auch in den Anwendungsfällen, in denen keine Abstützung des Tragholms 4 auf dem Boden erfolgt. Die Tragplatte 40 ist zusammen mit dem Schwenklager 50, 51, 52 gegenüber der maschinenfesten Platte 35 vertikal verschiebbar, wobei eine beidseitige Abstützung über die steifen Schraubenfedern 43 und eine kippsichere und klemmfreie Linearbewegung über die Führung 36, 37, 47, 48 sichergestellt wird. Um schädliche Stoßbelastungen des Tragholms und der weiteren Bauteile zu vermeiden, sind den Federelementen 43 Dämpfungselemente zugeordnet, die zweckmäßig zwischen mindestens einem axialen Ende des Federelements (Schraubenfeder 43) und der einen oder anderen Stützplatte 38, 41 angeordnet sind.

Die Erfindung ist nicht auf die dargestellten und vorstehend beschriebenen Ausführungsbeispiele beschränkt. So kann der Tragholm 4 beispielsweise aus herkömmlichen durch Biege-Umformen hergestellten Profilelementen zusammengebaut sein. Ferner kann am Stützfuß 20 eine Laufrolle als Aufstandselement vorgesehen sein. Die erfindungsgemäße Tragkonstruktion ist zur Anwendung bei verschiedenartigen Werkzeugmaschinen, insbesondere bei Fräsmaschinen, Drehmaschinen, Schleifmaschinen sowie entsprechenden Bearbeitungszentren, geeignet.

## Patentansprüche

1. Werkzeugmaschine mit einem Bedienpult (10) und einer Tragkonstruktion des Bedienpults, (10),
- bei welcher die Tragkonstruktion des Bedienpults (10) einen als Hohlprofil ausgebildeten biegesteifen Tragholm (4) aufweist,
- der Tragholm (4) ist über einen etwa horizontalen Abschnitt (5) an einer Seite der Werkzeugmaschine befestig und
- der Tragholm (4) trägt am Ende eines nach oben gerichteten Abschitts (6) das Bedienpult (10), das eine Tastatur (11) und eine Anzeigeeinheit (12) aufweist,
**dadurch gekennzeichnet, dass**
- am Tragholm (4) oder am Bedienpult (10) eine Sitzkonstruktion (14, 15, 16) für einen Bediener angeordnet ist und
- an dem über ein Gelenk an der Werkzeugmaschine verschwenkbar befestigten horizontalen Abschnitt (5) des Tragholms (4) mindestens ein Stützfuß (18) vorgesehen ist, der die von dem sitzenden Bediener ausgeübten Gewichtskräfte in den Fußboden einleitet.

2. Werkzeugmaschine nach Anspruch 1,
**dadurch gekennzeichnet, dass** der Tragholm (4) an dem Unterbau (2) der Werkzeugmaschine befestigt ist, und
zwischen dem Unterbau (2) der Werkzeugmaschine und dem Tragholm (4) eine Lageranordnung (3; 34) vorgesehen ist, die ein erstes Lager (3a; 36, 37) und ein mit diesem mechanisch gekoppeltes zweites Lager (3b; 50, 52) aufweist.

3. Werkzeugmaschine nach Anspruch 2,
**dadurch gekennzeichnet, dass**
die Lageranordnung (3) doppelgelenkig ist und ein erstes Schwenklager (3a) sowie ein zweites Drehlager (3b) mit einem Drehfederelement (3c) und einem Arretiermechanismus aufweist.

4. Werkzeugmaschine nach Anspruch 2,
**dadurch gekennzeichnet, dass**
die Lageranordnung (3,34) ein Drehlager (50, 51, 52) für die horizontalen Schwenkbewegungen des Tragholms und ein Linearlager (36, 37; 47, 48) für vertikale Verschiebebewegungen der Lageranordnung (3,34) aufweist.

5. Werkzeugmaschine nach Anspruch 4,
**dadurch gekennzeichnet, dass**
die Lageranordnung (3,34) zwei seitliche Stützfedern (43) und eine mittlere Linearführung (36, 37, 47, 48) sowie ggf. Dämpfungselemente aufweist.

6. Werkzeugmaschine nach einem der vorstehenden Ansprüche,
**dadurch gekennzeichnet, dass**
der Stützsitz ein Sitzpolster (15) enthält, das in verschiedene Positionen einstellbar und in diesen arretierbar ist.

7. Werkzeugmaschine nach einem der vorstehenden Ansprüche,
**dadurch gekennzeichnet, dass**
das Sitzpolster (15) auf einem abgebogenen Sitzbügel (16) drehfest befestigt ist, dessen verschwenkbare Tragstange (17) am oberen geraden Abschnitt des Tragholms (4) oder am Gehäuse (11a) der Tastatur (11) des Bedienpults (10) angelenkt und in der gewählten Sitzposition arretierbar ist.

8. Werkzeugmaschine nach Anspruch 7,
**dadurch gekennzeichnet, dass**
die Länge der Tragstange (17) verstellbar ist.

9. Werkzeugmaschine nach einem der vorstehenden Ansprüche,
**dadurch gekennzeichnet, dass**
das Sitzpolster (15) über die Tragstange (17) kinematisch mit der Lageranordnung (3) verbunden ist, sodass bei Belastung des Sitzpolsters (15) der Arretiermechanismus in der Lageranordnung gelöst wird.

10. Werkzeugmaschine nach einem der vorstehenden Ansprüche,
**dadurch gekennzeichnet, dass**
der Stützfuß (20) aus einer Stand-by-Stellung durch Belasten des Sitzpolsters (15) in eine aktive Stützstellung verstellbar ist.

11. Werkzeugmaschine nach einem der vorstehenden Ansprüche,
**dadurch gekennzeichnet, dass**
der Tragholm (4) einen abgerundeten Querschnitt hat und in seinem Inneren längs durchgehende Versteifungsleisten (30) sowie mindestens einen abgedeckten (27) Kabelkanal (26) aufweist.

## Claims

1. Machine tool having an operating console (10) and a supporting structure of the operating console (10),
- in which the supporting structure of the operating console (10) comprises a bending-resistant supporting beam (4) which is formed as a hollow profile,
- the supporting beam (4) is attached to one side of the machine tool via an approximately horizontal portion (5), and
- at the end of an upwardly directed portion (6) the supporting beam (4) supports the operating console (10) which comprises a keyboard (11) and a display unit (12),
**characterised in that**
a seat structure (14, 15, 16) for an operator is disposed on the supporting beam (4) or on the operating console (10) and
- at least one supporting leg (18) which introduces the weight forces exerted by the sitting operator into the floor is provided on the horizontal portion (5) of the supporting beam (4) which is pivotably attached to the machine tool via an articulated joint.

2. Machine tool as claimed in claim 1, **characterised in that** the supporting beam (4) is attached to the substructure (2) of the machine tool and a bearing arrangement (3; 34) which comprises a first bearing (3a; 36, 37) and a second bearing (3b; 50, 52) which is mechanically coupled thereto is provided between the substructure (2) of the machine tool and the supporting beam (4).

3. Machine tool as claimed in claim 2, **characterised in that** the bearing arrangement (3) has two articulated joints and comprises a first pivot bearing (3a) and a second pivot bearing (3b) having a torsion spring element (3c) and a locking mechanism.

4. Machine tool as claimed in claim 2, **characterised in that** the bearing arrangement (3, 34) comprises a pivot bearing (50, 51, 52) for the horizontal pivot movements of the supporting beam and a linear bearing (36, 37; 47, 48) for vertical shifting movements of the bearing arrangement (3, 34).

5. Machine tool as claimed in claim 4, **characterised in that** the bearing arrangement (3, 34) comprises two lateral support springs (43) and a central linear guide (36, 37, 47, 48) and optionally damping elements.

6. Machine tool as claimed in any one of the preceding claims, **characterised in that** the support seat contains a seat upholstery (15) which is adjustable to and lockable in various positions.

7. Machine tool as claimed in any one of the preceding claims, **characterised in that** the seat upholstery (15) is attached in a rotationally fixed manner to a bent seat holder (16), whose pivotable supporting pole (17) is articulated to the upper straight portion of the supporting beam (4) or to the housing (11a) of the keyboard (11) of the operating console (10) and can be locked in the selected seat position.

8. Machine tool as claimed in claim 7, **characterised in that** the length of the supporting pole (17) is adjustable.

9. Machine tool as claimed in any one of the preceding claims, **characterised in that** the seat upholstery (15) is kinematically connected to the bearing arrangement (3) via the supporting pole (17), so that in the event of a load acting upon the seat upholstery (15) the locking mechanism in the bearing arrangement is released.

10. Machine tool as claimed in any one of the preceding claims, **characterised in that** the supporting leg (20) can be adjusted from a standby position to an active supporting position by applying a load to the seat upholstery (15).

11. Machine tool as claimed in any one of the preceding claims, **characterised in that** the supporting beam (4) has a rounded cross-section and comprises in its interior longitudinally continuous stiffening bars (30) and at least one covered (27) cable channel (26).

## Revendications

1. Machine-outil munie d'un pupitre de commande (10), et d'un bâti support du pupitre de commande (10),
- dans laquelle le bâti support du pupitre de commande (10) présente un bras support (4) rigide en flexion prenant la forme d'un profilé creux,
le bras support (4) est fixé sur un flanc de la machine-outil par l'intermédiaire d'une portion (5) à peu près horizontale, et
- le bras support (4) supporte, à l'extrémité d'une portion (6) dirigée vers le haut, le pupitre de commande (10) qui présente un clavier (11) et un dispositif d'affichage (12),
**caractérisée en ce que**
- un bâti de siège (14, 15, 16) destiné à un utilisateur est disposé sur le bras support (4) ou sur le pupitre de commande (10) et
- au moins un pied d'appui (18), qui fait porter sur le sol le poids exercé par l'utilisateur assis, est prévu sur la portion horizontale (5) du bras support (4), fixée sur la machine-outil de manière à pouvoir pivoter par le biais d'une articulation.

2. Machine-outil selon la revendication 1,
**caractérisée en ce que**
le bras support (4) est fixé sur le châssis (2) de la machine-outil, et un système de paliers (3 ; 34), qui présente un premier palier (3a ; 36, 37) et un deuxième palier (3b ; 50, 52) couplé mécaniquement au premier, est prévu entre le châssis (2) de la machine-outil et le bras support (4).

3. Machine-outil selon la revendication 2,
**caractérisée en ce que**
le système de paliers (3) est doublement articulé et présente un premier palier de pivotement (3a) et un deuxième palier de rotation (3b) avec un élément de ressort rotatif (3c) et un mécanisme de blocage.

4. Machine-outil selon la revendication 2,
**caractérisée en ce que**
le système de paliers (3 ; 34) présente un palier de rotation (50, 51, 52) pour les mouvements de pivotement horizontaux du bras support et un palier linéaire (36, 37 ; 47, 48) pour les mouvements de glissement verticaux du système de paliers (3 ; 34).

5. Machine-outil selon la revendication 4,
**caractérisée en ce que**
le système de paliers (3 ; 34) présente deux ressorts d'appui latéraux (43) et un guidage linéaire médian (36, 37, 47, 48) ainsi que, éventuellement, des éléments amortisseurs.

6. Machine-outil selon l'une des revendications précédentes,
**caractérisée en ce que**
le siège d'appui comprend un rembourrage de siège (15) qui est réglable dans diverses positions et peut être bloqué dans celles-ci.

7. Machine-outil selon l'une des revendications précédentes,
**caractérisée en ce que**
le rembourrage de siège (15) est fixé de manière à être rigide en torsion sur une semelle de siège courbée (16), dont la tige support (17) pivotante est articulée sur la portion droite supérieure du bras support (4) ou sur le boîtier (11a) du clavier (11) du pupitre de commande (10) et peut être bloquée dans la position d'assise choisie.

8. Machine-outil selon la revendication 7,
**caractérisée en ce que** la longueur de la tige support (17) est réglable.

9. Machine-outil selon l'une des revendications précédentes,
**caractérisée en ce que**
le rembourrage de siège (15) est lié de manière cinématique avec le système de paliers (3) par le biais de la tige support (17) de manière à ce que, en cas de sollicitation du rembourrage de siège (15), le mécanisme de blocage soit déclenché dans le système de paliers.

10. Machine-outil selon l'une des revendications précédentes,
**caractérisée en ce que**
le pied d'appui (20) est réglable d'une position stand-by à une position d'appui actif du fait de la sollicitation du rembourrage de siège (15).

11. Machine-outil selon l'une des revendications précédentes,
**caractérisée en ce que**
le bras support (4) a une section transversale circulaire et présente, dans son intérieur, des tasseaux de rigidification longitudinaux (30) et au moins un canal pour câbles (26) recouvert (27).
